# EUROPEAN PATENT SPECIFICATION

(11) **EP 0 607 499 B1**
(45) Date of publication and mention of the grant of the patent: **10.06.1998**
(21) Application number: 93114439.8
(22) Date of filing: 08.09.1993
(51) Int. Cl.: B29C 45/27, H01R 4/36

(54) **Injection molding nozzle having an electrical terminal with an insulative connector**
Spritzgiessdüse mit einem elektrischen Anschlusselement mit isolierendem Stecker
Buse de moulage par injection ayant une borne électrique avec un connecteur isolant

(30) Priority: 10.09.1992 CA 2078180
(43) Date of publication of application: 27.07.1994
(73) Proprietor: MOLD-MASTERS LIMITED, Georgetown Ontario L7G 4X5 (CA)
(72) Inventor: Renwick, Craig W., Georgetown, Ontario L7C 5K5 (CA)
(74) Representative: Grünecker, Kinkeldey, Stockmair & Schwanhäusser Anwaltssozietät

(56) References cited:
- EP-A- 0 546 581
- GB-A- 570 307
- US-A- 4 557 685
- US-A- 4 837 925

## Description

### BACKGROUND OF THE INVENTION

This invention relates generally to injection molding and more particularly to a heated nozzle with an electrical terminal having an electrically insulative connector.

Injection molding nozzles having an integral electrical heating element extending to a terminal are well known in the art. The diameter of the conductive wire in the heating element must be larger adjacent the terminal to avoid excessive heat at the terminal. The conductive wire must be electrically connected at the terminal to an external lead or leads and be electrically insulated from the nozzle body which is made of steel.

In the past, this has been provided for low voltage nozzles with only a single external lead by having a layer of insulation between an inner portion of the terminal and an outer portion to which the conductive wire and external lead are both connected. This is shown in U.S. patent number 4,837,925 to Gellert which issued June 13, 1989. Nozzles having terminals to connect both ends of the electrical heating element to separate external leads are more difficult. In addition to overcoming the above problems, electrical separation must be maintained between the two leads and between the two outer end portions of the conductive wire. Also connecting and disconnecting of the external leads must be facilitated, and the terminal must have sufficient structural strength to avoid bending or breaking when this is done. Gellert Canadian patent application serial number 2,057,594-8 filed December 13, 1991 entitled "Method of Making an Injection Molding Nozzle with a Single Heating Element in a Double Channel" shows a nozzle with a terminal for connecting a pair of external leads. Each lead extends into a longitudinal bore in a connector where its bared inner end portion overlaps a respective outer end portion of the conductive wire and they are secured together by a set screw which is screwed into the connector. However, the connector is made of metal and therefore must be surrounded by a separate insulator made of a ceramic material. In addition to requiring the manufacture of both connectors and insulators, this has the disadvantage that installation is relatively difficult because the transverse openings in the insulator must be aligned with the transverse openings in the connector. Also, the terminal must be long enough to allow the insulator to extend out past the metal connector at both ends, and it is difficult to seal the outer end of the terminal against moisture.

### SUMMARY OF THE INVENTION

Accordingly, it is an object of the present invention to at least partially overcome the disadvantages of the prior art by providing an injection molding heated nozzle with an electrical terminal having an insulative connector. To this end, in one of its aspects, the invention provides an injection molding nozzle having a body with a rear end, an electrical heating element extending in the body, and an electrical terminal extending outwardly from the body adjacent the rear end of the body, the heating element having at lest one rear portion extending outwardly to the terminal to receive electrical power through at least one external lead, the at least one rear portion of the heating element having an electrically conductive wire surrounded by insulation inside a protective casing, having the improvement wherein the body has a threaded stud projecting outwardly adjacent the rear end of the body, the at least one rear portion of the heating element projects outwardly through the stud with an outer end portion of the conductive wire extending a predetermined distance past the insulation and protective casing, an insulative connector having at least one longitudinal bore with an inner end and an outer end extending therethrough is mounted with the at least one projecting rear portion of the heating element extending outwardly into the at least one longitudinal bore through the inner end with the outer end portion of the conductive wire to overlap with a bared inner end portion of the at least one external lead inserted inwardly through the outer end of the at least one longitudinal bore, the insulative connector having at least one transverse opening extending into the at least one longitudinal bore, the at least one transverse opening having thread means to receive screw means to secure the overlapping outer end portion of the conductive wire and the inner end portion of the at least on external lead together, a hollow cap having a threaded inner end and an outer end with an opening therethrough to be mounted over the insulative connector and screwed onto the threaded stud to secure the insulative connector in place with the at least one external lead extending inwardly through the opening in the outer end of the cap into the at least one longitudinal bore in the insulative connector.

### BRIEF DESCRIPTION OF THE DRAWINGS

Figure 1 is an isometric view of an injection molding nozzle with an electrical terminal according to a preferred embodiment of the invention,
Figure 1A is a sectional view of the terminal seen in Figure 1,
Figure 2 is an exploded isometric view showing a portion of the nozzle seen in Figure 1 in position for assembly,
Figure 3 is an exploded isometric view also showing the terminal and the external leads in position for assembly and connection,
Figure 3A is a sectional view of the insulative connector, and
Figure 3B is a sectional view showing the heating element.

### DETAILED DESCRIPTION OF THE DRAWINGS

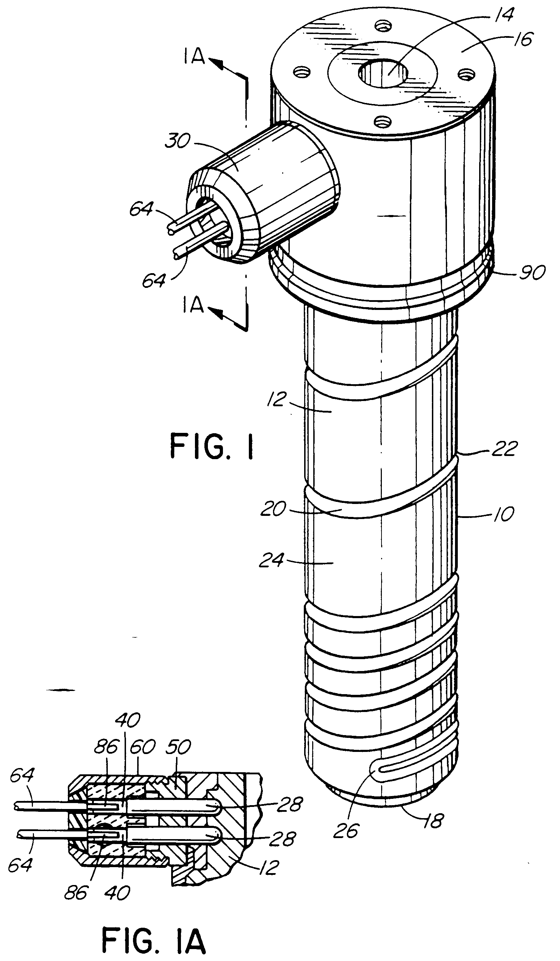

Reference is first made to Figure 1 which shows an injection molding nozzle 10 having a steel body 12 with a central melt bore 14 extending therethrough from the rear end 16 to the forward end 18. An electrical heating element 20 is integrally brazed in a spiral channel 22 which extends around the outer surface 24 of the nozzle body 12. In this embodiment, the heating element 20 has a U-shaped bend 26 near the forward end 18 of the body and two rear portions 28 which extend outwardly to an electrical terminal 30 which extends outwardly from the body 12 adjacent the rear end 16. In another embodiment of the invention, a low voltage nozzle is provided having a heating element with one end grounded to the steel body 12 near its forward end and only one rear portion extending outwardly to the electrical terminal.

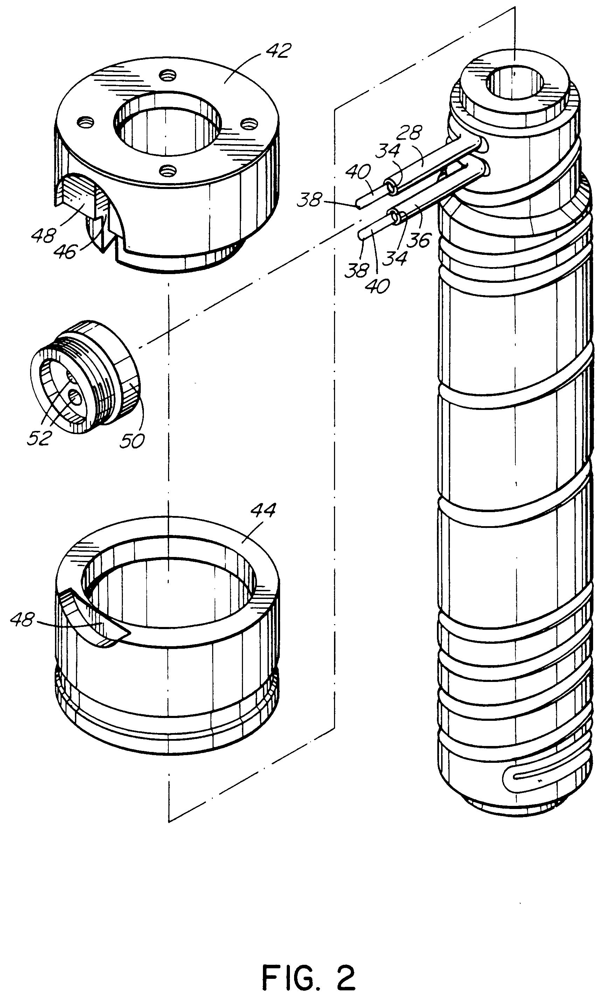

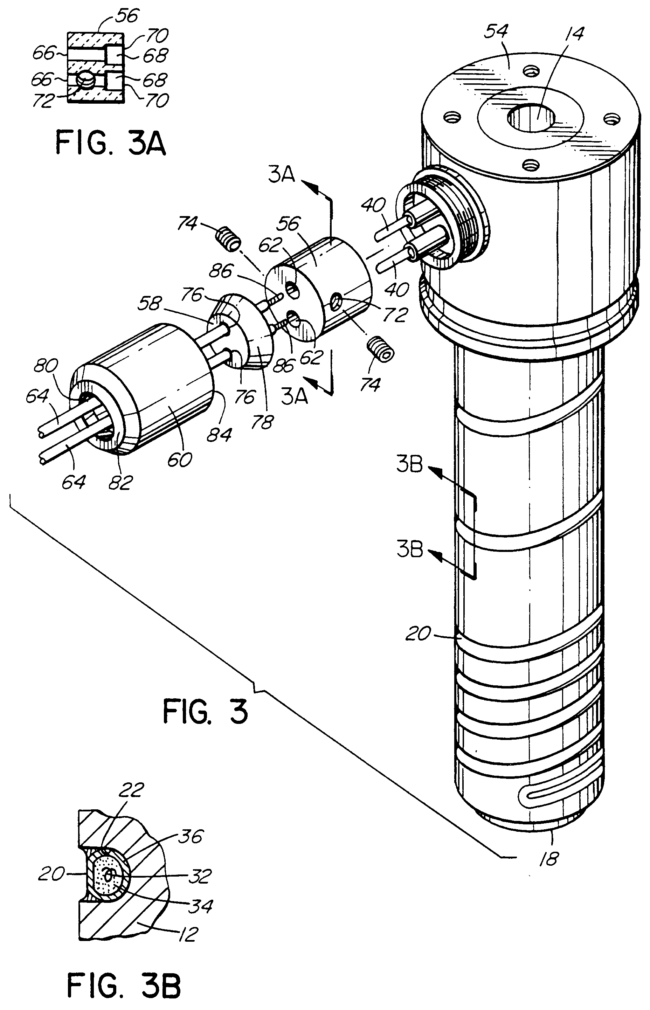

The nozzle 10 is manufactured and the external leads are connected to it as seen in Figures 2 and 3. As seen in Figure 2, the electrical heating element 20 is first wound tightly in the spiral channel 22, with the two rear portions 28 projecting radially outwards in a spaced parallel relationship near the rear end 16 of the body 12. As seen in Figure 3B, the heating element 20 has a fine coiled resistance wire 32 surrounded by an insulating material 34 such as magnesium oxide powder in a protective steel casing 36. The fine heating wire 32 is connected to larger diameter conductive wires 38 which extends through the insulating material 34 in the rear portions 28 of the heating element 20 so the terminal 30 is not heated. As can be seen, each conductive wire 38 has a bare outer end portion 40 which extends outwardly a predetermined distance past the insulation 34 and the casing 36.

A steel rear collar 42 and interlocking steel forward collar 44 are mounted together at the rear end of the nozzle body 12. The rear collar 42 has a slot 46 through which the two rear portions 28 of the electrical heating element 20 extend. Together the rear and forward collars 42, 44 form a seat 48 in which a threaded steel stud 50 is received. The stud 50 has a pair of spaced parallel bores 52 through which the two rear portions 28 of the electrical heating element 20 extend to ensure they project outwardly in the proper spaced parallel positions.

After these components are assembled together, brazing material such as nickel alloy paste is applied along the joins between them and along the heating element 20 similar to the description in U.S. patent number 4,557,685 to Gellert which issued December 10, 1985. The assembled components are then heated in a vacuum furnace above the melting temperature of the brazing material according to a predetermined cycle. As the furnace is gradually heated, it is evacuated to a relatively high vacuum to remove nearly all of the oxygen. Before the melting temperature of the brazing material is reached, the vacuum is reduced by partially backfilling with an inert gas such as argon or nitrogen. When the nickel alloy brazing material melts, it flows by capillary action along the joints between the components and around the heating element 20 to completely embed it in the spiral channel 22. This brazing in the vacuum furnace provides a metallurgical bonding of the nickel alloy to the steel of the various components to form a metallurgically monolithic integral structure 54. After the structure 54 is cooled and removed from the vacuum furnace, it is machined to provide the dimensional integrity required of a finished product, with the forward end 18 of the nozzle body 12 having a predetermined shape for a particular gating configuration.

Referring now to Figures 3 and 3A, the terminal 30 of the nozzle 10 is completed by mounting a cylindrical shaped insulative connector 56 and a disc shaped resilient seal 58 in a removable steel cap 60 to the integral structure 54 described above. In this embodiment of the invention the insulative connector 56 has a pair of spaced parallel bores 62 extending longitudinally therethrough. Each longitudinal bore 62 is large enough in diameter to receive an external electrical lead 64 through its outer end 66, and has a larger diameter portion 68 extending from its inner end 70. In this embodiment, the connector 56 is made of a suitable ceramic material, but in other embodiments it can be made of high temperature plastic of other suitable insulative materials. The insulative connector 56 also has an opening 72 extending transversely into each longitudinal bore 62. Each transverse opening 72 is threaded to receive a short set screw 74. In this embodiment, the two transverse openings 72 extend from opposite sides of the insulative connector 56 to avoid structurally weakening it. In this embodiment, the resilient seal 58 is made of silicon rubber and also has a pair of spaced parallel bores 76 extending therethrough to align with the longitudinal bores 62 through the insulative connector 56. The resilient seal 58 has a tapered outer surface 78 which fits securely in an opening 80 in the outer end 82 of the cap 60. The hollow cap 60 also has a threaded inner end 84 which screws onto the threaded stud 50 to hold the insulative connector 56 and resilient seal 58 securely in place. Mounting the steel cap 60 over the ceramic connector 56 gives the electrical terminal considerable structural strength to ensure it is not accidentally damaged during use.

Connection of the external electrical leads 64 having bared inner end positions 86 will now be described with reference to Figure 3. The insulative connector 56 is mounted with the outer ends 88 of the insulating material 34 and protective casing 36 of the heating element 20 received in the larger diameter portions 68 of its longitudinal bores 62. In this position, the outer end portion 40 of each conductive wire 38 extends a predetermined distance into one of the longitudinal bores 62 of the insulative connector 56. The outer end portions 40 of the conductive wires 38 are preferably stamped to give them a concave cross section to ensure a good electrical connection with the inner end portions 86 of the external leads 64. The external leads 64 are inserted in through the opening 80 in the outer end 82 of the cap 60 and through the respective bores 76 in the resilient seal 58. The cap 60 and resilient seal 58 slide up the leads 64 out of the way and the leads 64 are then inserted into the respective longitudinal bores 62 in the insulative connector 56 through their outer ends 66 until their bared inner end portions 86 overlap the outer end portions 40 of the conductive wires 38 by a predetermined amount. The set screws 74 are then tightened in the transverse openings 72 in the insulative connector 56 to secure the overlapping outer end portions 40 and inner end portions 86 together. The resilient seal 58 and cap 60 are then slid into place with the cap 60 covering the insulative connector 56 and the threaded inner end 84 of the cap 60 is tightened onto the threaded stud 50. The bores 76 through the resilient seal 58 are made to fit the external leads 64 and tightening the cap 60 over the seal 58 ensures a seal is provided to prevent moisture entering into the longitudinal bores 62 in the insulative connector 56 and also prevents damage to the connector 56. This arrangement ensures the terminal has very good electrical connections and considerably facilitates connecting and disconnecting the external leads 64 to the nozzle. The combination of the steel cap 60 fitting over the insulative connector 56 protects the ceramic connector 56 and avoids any loss of structural strength due to the connections being made in a ceramic connector.

In use, the nozzle 10 is mounted in a suitable mold with the insulation flange portion 90 received in a suitable seat. The external leads 64 are connected as described above and they provide electrical power to heat the nozzle 10 to a predetermined operating temperature. Pressurized melt from a molding machine is injected through the central melt bore 14 in the nozzle 10 according to the injection cycle.

While the description of the nozzle 10 has been given with respect to a preferred embodiment, it will be evident that various modifications are possible without departing from the scope of the invention as defined in the following claims. In particular, as mentioned above, some low voltage nozzles only require a single external lead 64. In this embodiment, the insulative connector 56 and resilient seal 58 only require a single longitudinal bore rather than the pair of spaced parallel bores described above.

## Claims

1. Injection molding nozzle (10) having a body (12) with a rear end (16), an electrical heating element (20) extending in the body (12), and an electrical terminal (30) extending outwardly from the body (12) adjacent the rear end (16) of the body, the heating element (20) having at least one rear portion (28) extending outwardly to the terminal (30) to receive electrical power through at least one external lead (64), the at least one rear portion (28) of the heating element (20) having an electrically conductive wire (38) surrounded by insulation (34) inside a protective casing (36), wherein
the body (12) has a threaded stud (50) projecting outwardly adjacent the rear end (16) of the body (12), the at least one rear portion (28) of the heating element (20) projects outwardly through the stud (50) with an outer end portion (40) of the conductive wire (38) extending a predetermined distance past the insulation (34) and protective casing (36), an insulative connector (56) having at least one longitudinal bore (62) with an inner end (70) and an outer end (66) extending therethrough is mounted with the at least one projecting rear portion (28) of the heating element (20) extending outwardly into the at least one longitudinal bore (62) through the inner end (70) with the outer end portion (40) of the conductive wire (38) to overlap with a bared inner end portion (86) of the at least one external lead (64) inserted inwardly through the outer end (66) of the at least one longitudinal bore (62), a hollow cap (60) having a threaded inner end (84) and an outer end (82) with an opening (80) therethrough to be mounted over the insulative connector (56) and screwed onto the threaded stud (50) to secure the insulative connector (56) in place with the at least one external lead (64) extending inwardly through the opening (80) in the outer end (82) of the cap (60) into the at least one longitudinal bore (62) in the insulative connector (56), characterised in that the insulative connector (56) has at least one transverse opening (72) extending into the at least one longitudinal bore (62),the at least one transverse opening (72) having thread means to receive screw means (74) to secure the overlapping outer end portion (40) of the conductive wire (36) and the inner end portion (86) of the at least one external lead (64) together.

2. An injection molding nozzle as claimed in claim 1, **characterized in that** a pair of external leads (64, 64) each having a bared inner end portion (86, 86) is provided to receive electrical power wherein the insulative connector (56) has a pair of spaced parallel longitudinal bores (62, 62) extending therethrough, the electrical heating element (20) has a pair of rear portions (28, 28) projecting outwardly through the stud (50), each rear portion (28, 28) extending outwardly into a respective one of the longitudinal bores (62, 62) in the insulative connector (56) with the outer end portion (40, 40) of the conductive wire (38, 38) overlapping the inner end portion (86, 86) of a respective one of the inwardly extending external leads (64, 64), the insulative connector (56) having transverse openings (72, 72) extending into each of the longitudinal bores (62, 62), each transverse opening (72, 72) having thread means to receive screw means (74, 74) to secure the outwardly extending outer end portion of the respective rear portion (28) of the heating element (20) together with the overlapping inwardly extending inner end portion (86) of the external lead (64).

3. An injection molding nozzle as claimed in claim 2, **characterized in that** a resilient seal (58) is mounted in the hollow cap (60) between the insulative connector (56) and the outer end (82) of the cap (60), the resilient seal (58) having a pair of spaced parallel bores (76, 76) extending therethrough in alignment with the longitudinal bores (62, 62) through the insulative connector (56), each of the bores (76, 76) through the resilient seal (58) receiving a respective one of the external leads (64, 64) therethrough with the bore fitting the external lead (64, 64) to provide a seal against moisture entering into the longitudinal bore (62, 62) in the insulative connector (56).

4. An injection molding nozzle as claimed in claim 3, **characterized in that** the insulative connector (56) is formed of ceramic material.

## Patentansprüche

1. Spritzgießßdüse (10) mit einem Körper (12), der ein hinteres Ende (16) besitzt, einem elektrischen Heizelement (20), das sich in dem Körper (12) erstreckt, und einem elektrischen Anschluß (30), der sich von dem Körper (12) in der Nähe des hinteren Endes (16) nach außen erstreckt, wobei das Heizelement (20) wenigstens einen hinteren Bereich (28) besitzt, der sich nach außen zu dem Anschluß (30) erstreckt, um über wenigstens eine externe Leitung (64) elektrische Leistung aufzunehmen, wobei der wenigstens eine hintere Bereich (28) des Heizelementes (20) einen elektrisch leitenden Draht (38) in einem Schutzgehäuse (36) besitzt, der von einer Isolierung (34) umgeben ist, bei der
der Körper (12) einen Gewindebolzen (50) aufweist, der in der Nähe des hinteren Endes (16) des Körpers (12) nach außen vorsteht,
der wenigstens eine hintere Bereich (28) des Heizelementes (20) durch den Bolzen (50) nach außen vorsteht, wobei sich ein äußerer Endbereich (40) des Leitungsdrahtes (38) über eine vorgegebene Strecke aus der Isolation (34) und dem Schutzgehäuse (36) erstreckt,
ein isolierendes Anschlußteil (56) mit wenigstens einer durch dieses verlaufenden Längsbohrung (62) mit einem inneren Ende (70) und einem äußeren Ende (66) an dem wenigstens einen vorstehenden hinteren Bereich (28) des Heizelementes (20) angebracht ist, der sich nach außen in die wenigstens eine Längsbohrung (62) durch das innere Ende (68) erstreckt, wobei der äußere Endbereich (40) des Leitungsdrahtes (38) mit einem abisolierten inneren Endbereich (86) der wenigstens einen externen Leitung (64) überlappt, die durch das äußere Ende (66) der wenigstens einen Längsbohrung (62) eingesetzt ist,
eine Hohlkappe (60) mit einem mit Gewinde versehenen inneren Ende (84) und einem äußeren Ende (82) mit einer durch dieses Ende (82) führenden Öffnung (80) zur Anbringung über dem isolierenden Anschlußteil (56) und zur Verschraubung mit dem Gewindebolzen (50), um das isolierende Anschlußteil (56) an seinem Ort zu befestigen, wobei sich die wenigstens eine externe Leitung (64) durch die Öffnung (80) im äußeren Ende (82) der Kappe (60) in die wenigstens eine Längsbohrung (62) in dem isolierenden Anschlußteil (56) nach innen erstreckt,
**dadurch gekennzeichnet,** daß
das isolierende Anschlußteil (56) wenigstens eine Queröffnung (72) aufweist, die sich in die wenigstens eine Längsbohrung (62) erstreckt, wobei die wenigstens eine Queröffnung (72) eine Gewindeeinrichtung besitzt, um ein Schraubenteil (74) aufzunehmen, um den überlappenden äußeren Endbereich (40) des Leitungsdrahtes (38) und den inneren Endbereich (86) der zumindest einen externen Leitung (64) gegeneinander zu sichern.

2. Spritzgießdüse nach Anspruch 1, **dadurch gekennzeichnet,** daß ein Paar von externen Leitungen (64), die jeweils einen abisolierten inneren Endbereich (86,86) besitzen, vorgesehen ist, um elektrische Leistung aufzunehmen, wobei
das isolierende Anschlußteil (56) ein Paar von durch dieses verlaufenden parallel beabstandeten Längsbohrungen (62) besitzt,
das elektrische Heizelement (20) ein Paar von hinteren Bereichen (28,28) besitzt, die sich durch den Bolzen (50) nach außen erstrecken, wobei sich jeder hintere Bereich (28,28) nach außen in eine entsprechende der Längsbohrungen (62,62) in dem isolierenden Anschlußteil (56) erstreckt, und wobei der äußere Endbereich (40,40) des Leitungsdrahtes (38,38) den inneren Endbereich (86,86) der entsprechenden, sich nach innen erstreckenden externen Leitungen (64) überlappt, und
das isolierende Anschlußteil (56) Queröffnungen (72,72) besitzt, die sich in jede der Längsbohrungen (62,62) erstreckt, wobei jede Queröffnung (72,72) eine Gewindeeinrichtung zur Aufnahme eines Schraubenteils (74,74) besitzt, um den sich nach außen erstreckenden äußeren Endbereich des entsprechenden hinteren Bereichs (28) des Heizelementes (20) gegen den überlappenden, sich nach innen erstreckenden inneren Endbereich (86) der externen Leitung (64) zu sichern.

3. Spritzgießdüse nach Anspruch 2, **dadurch gekennzeichnet**, daß eine nachgiebige Dichtung (58) in der Hohlkappe (60) zwischen dem isolierenden Anschlußteil (56), und dem äußeren Ende der Kappe (60) angebracht ist, wobei die nachgiebige Dichtung (58) ein Paar von durch diese verlaufenden parallel beabstandeten Bohrungen (76,76) besitzt, die zu den Längsbohrungen (62,62) durch das isolierende Anschlußteil (56) ausgerichtet sind, wobei jede der Bohrungen (76,76) durch die nachgiebige Dichtung (58) eine entsprechende der externen Leitungen (64,64) aufnimmt, wobei die Bohrung die externe Leitung (64,64) eng umgibt, um eine Dichtung gegen Feuchtigkeit zu schaffen, die sonst in die Längsbohrung (62,62) im isolierenden Anschlußteil (56) eindringen würde.

4. Spritzgießdüse nach Anspruch 3, **dadurch gekennzeichnet**, daß das isolierende Anschlußteil (56) aus einem keramischen Material gebildet ist.

## Revendications

1. Buse (10) de moulage par injection comportant un corps (12) présentant une extrémité postérieure (16), un élément chauffant électrique (20) s'étendant dans le corps (12), et une borne électrique (30) s'étendant vers l'extérieur à partir du corps (12), au voisinage direct de l'extrémité postérieure (16) du corps, l'élément chauffant (20) étant muni d'au moins une partie postérieure (28) s'étendant extérieurement vers la borne (30) afin de recevoir une puissance électrique par l'intermédiaire d'au moins un conducteur extérieur (64), la partie postérieure (28) de l'élément chauffant (20), prévue au minimum, ayant un fil métallique (38) électriquement conducteur, entouré par une isolation (34) à l'intérieur d'une gaine protectrice (36), buse dans laquelle le corps (12) est doté d'un embout fileté (50) saillant vers l'extérieur au voisinage direct de l'extrémité postérieure (16) du corps (12) ; la partie postérieure (28) de l'élément chauffant (20), prévue au minimum, dépasse vers l'extérieur à travers l'embout (50), une région extrême extérieure (40) du fil métallique conducteur (38) faisant saillie, d'une distance prédéterminée, au-delà de l'isolation (34) et de la gaine protectrice (36) ; un connecteur isolant (56), parcouru par au moins un alésage longitudinal (62) comprenant une extrémité interne (70) et une extrémité externe (66), est monté de façon telle que la partie postérieure saillante (28) de l'élément chauffant (20), prévue au minimum, s'étende vers l'extérieur et pénètre dans l'alésage longitudinal (62) prévu au minimum, à travers l'extrémité interne (70), par la région extrême extérieure (40) du fil métallique conducteur (38), afin de venir chevaucher une région extrême intérieure dénudée (86) du conducteur extérieur (64) prévu au minimum, qui est insérée à travers l'extrémité externe (66) de l'alésage longitudinal (62) prévu au minimum ; un capuchon creux (60) comprend une extrémité interne taraudée (84) et une extrémité externe (82) traversée par une ouverture (80), afin de venir coiffer le connecteur isolant (56) et d'être vissé sur l'embout fileté (50), pour consigner le connecteur isolant (56) à demeure de façon telle que le conducteur extérieur (64), prévu au minimum, s'étende vers l'intérieur à travers l'ouverture (80) pratiquée dans l'extrémité externe (82) du capuchon (60), et pénètre dans l'alésage longitudinal (62) prévu au minimum dans le connecteur isolant (56), caractérisée par le fait que le connecteur isolant (56) possède au moins un orifice transversal (72) débouchant dans l'alésage longitudinal (62) prévu au minimum, l'orifice transversal (72), prévu au minimum, étant pourvu de moyens filetés pour recevoir des moyens vissables (74), afin de fixer l'une à l'autre la région extrême extérieure chevauchante (40) du fil métallique conducteur (36) et la région extrême intérieure (86) du conducteur extérieur (64) prévu au minimum.

2. Buse de moulage par injection selon la revendication 1, caractérisée par le fait qu'une paire de conducteurs extérieurs (64, 64), présentant chacun une région extrême intérieure dénudée (86, 86), est prévue pour recevoir une puissance électrique, buse dans laquelle le connecteur isolant (56) est parcouru par une paire d'alésages longitudinaux (62, 62) parallèles et espacés ; l'élément chauffant électrique (20) comporte une paire de parties postérieures (28, 28) saillant vers l'extérieur a travers l'embout fileté (50), chaque partie postérieure (28, 28) s'étendant vers l'extérieur et pénétrant dans l'un respectif des alésages longitudinaux (62, 62) pratiqués dans le connecteur isolant (56), la région extrême extérieure (40, 40) du fil métallique conducteur (38, 38) chevauchant la région extrême intérieure (86, 86) de l'un respectif des conducteurs extérieurs (64, 64) s'étendant vers l'intérieur ; et le connecteur isolant (56) possède des orifices transversaux (72, 72) débouchant dans chacun des alésages longitudinaux (62, 62), chaque orifice transversal (72, 72) étant pourvu de moyens filetés pour recevoir des moyens vissables (74, 74) afin d'assujettir l'une à l'autre la région extrême externe, s'étendant vers l'extérieur, de la partie postérieure respective (28) de l'élément chauffant (20), et la région extrême intérieure chevauchante (86), s'étendant vers l'intérieur, du conducteur extérieur (64).

3. Buse de moulage par injection selon la revendication 2, caractérisée par le fait qu'une garniture élastique d'étanchement (58) est montée dans le capuchon creux (60), entre le connecteur isolant (56) et l'extrémité externe (82) du capuchon (60), la garniture élastique d'étanchement (58) étant traversée par une paire de trous (76, 76) parallèles et espacés, alignés avec les alésages longitudinaux (62, 62) parcourant le connecteur isolant (56), chacun des trous (76, 76), pratiqués dans la garniture élastique d'étanchement (58), permettant le passage de l'un respectif des conducteurs extérieurs (64, 64), le trou assurant l'ajustement du conducteur extérieur (64, 64) pour conférer une étanchéité empêchant une pénétration d'humidité dans l'alésage longitudinal (62, 62) pratiqué dans le connecteur isolant (56).

4. Buse de moulage par injection selon la revendication 3, caractérisée par le fait que le connecteur isolant (56) est fabriqué en un matériau céramique.
